# EUROPEAN PATENT APPLICATION

(11) **EP 2 393 020 A1**
(43) Date of publication of application: **07.12.2011**
(21) Application number: 10190971.1
(22) Date of filing: 12.11.2010
(51) Int. Cl.: G06F 17/30

(54) **Optimal fetching of data in a data access tier of a multi-tier application**

(30) Priority: 31.05.2010 IN CH14982010
(71) Applicant: Tieto Oyj, 00441 Helsinki (FI)
(72) Inventor: Vaid, Sandeep, 411046, Pune (IN)
(74) Representative: Kitzler, Michael

(57) **Abstract**

According to an aspect of the present invention, a fetch module implemented in a data access tier of a multi-tier application fetches from a data store only the set of objects specified by a request received from a process module implemented in a business logic tier of the multitier application, and provides the fetched objects as a response to the request. The set of objects specified in the request is according to the requirements of a business use case (specifying a sequence of interactions between the multi-tier application and users) according to which the process module is implemented.

## Description

**Technical Field**

The present invention relates to software application development, and more specifically to optimal fetching of data in a data access tier of a multi-tier application.

**Background of the Invention**

An application refers to a software program, which on execution performs specific desired tasks. For convenience, an application may be divided into multiple tiers, with each tier providing a disparate and specific utility with appropriate interfaces for interacting with other tiers. The different tiers, executing on the same machine or on different machines connected through a network, operate together to perform the desired tasks.

An example of a multi-tier application is a three-tier application in which a presentation tier provides user interfaces, a business logic tier implements the general computational aspects and a data access tier provides access to data stored in a persistent storage (e.g. databases). Having such multiple tiers generally enables different tiers to be designed/developed by different groups/vendors, etc., and also simplifies maintenance of the software program/application.

There is a general need to implement optimal fetching of data in the data access tier of a multi-tier application. Optimal fetching of data implies that only the data required/requested by the higher level tiers (such as the business logic tier) is fetched, that the fetching of data from the persistent storage is performed efficiently (in terms of time taken to perform the fetch, the number of queries performed, the operations used for fetching, etc.), and that the software instructions forming the data access tier are highly maintainable (that is, the instructions can be easily understood and modified by users other than the original developer).

**Related art**
Examples of related art are found in the following publications.
On the Internet website http://download.oracle.com/docs/cd/E13189_01/kodo/docs40/index.html there is currently disclosed an application with a query interface that performs object filtering and data retrieval in a database.

The patent publication US6163776 discloses a system for exchanging data and commands between an object oriented system and a relational system. This piece of prior art is directed to translating data from the relational model to the object model.

The patent publication US5710900 discloses a system for generating reports from a computer database. This publication is directed to a subsystem to a graphical user interface wherein the subsystem which realizes a user selectable method of analysis and a query system to retrieve data from the database.

### Object of the invention

The general object of the invention and the problem to be solved by the invention is to provide a technical solution that enables an improved efficiency in retrieving data in the data access tier of a multi-tier application while fulfilling a requirement of high maintainability.

Partial problem aspects that the invention addresses:
- Reducing the number of fetch modules and corresponding number of lines of code in the multi-tier application.
- Reducing the need to fetch additional data in a database in addition to the requested data.

This problem and its aspects is further explained below in the detailed description.

### Summary of the invention

The object is fulfilled and the problem solved by the invention as defined in the accompanying claims in the form of a method, a system and a computer program product comprising set of implementing instructions in the form of computer program code portions.

According to a first aspect, the invention is embodied in a method of fetching data from a data store in a multi-tier application, said method comprising the steps of:
implementing a first process module according to a first business use case in a business logic tier of said multi-tier application, wherein said first business use case specifies a first sequence of interactions between said multi-tier application and users;
receiving in a fetch module implemented in a data access tier of said multi-tier application, a first request from said first process module specifying a first set of objects sought to be fetched from said data store according to the requirements for said first business use case; fetching, from said data store, only said first set of objects specified in said first request,
said fetching being performed in said fetch module; and
providing, from said fetch module to said first process module, said first set of objects as a response to said first request.

Possibly, further comprising the steps of:
implementing a second process module according to a second business use case in said business logic tier, wherein said second business use case specifies a second sequence of interactions between said multi-tier application and users,
wherein said receiving receives in said fetch module, a second request from said second process module specifying a second set of objects sought to be fetched from said data store according to the requirements for said second business use case,
wherein said fetching fetches from said data store said second set of objects,
wherein said providing provides from said fetch module to said second process module,
said second set of objects as a response to the said second request.

Possibly, wherein said first request indicates a first set of object types
corresponding to said first set of objects and said second request indicates a second set of object types corresponding to said second set of objects, wherein said first set of object types is different from said second set of object types.

Possibly, wherein said first set of object types and said second set of
object types are included in a plurality of object types,
wherein said plurality of object types form an object graph, said first set of object types form a first sub-graph of said object graph and said second set of object types form a second sub-graph of said object graph.

Possibly, wherein said fetch module is designed to accept a parameter
indicating the object types to be fetched,
wherein said first request corresponds to a first invocation of said fetch module with said parameter having a first value, wherein said first value specifies said first set of object types, wherein said second request corresponds to a second invocation of said fetch module with said parameter having a second value, wherein said second value specifies said second set of object types.

Possibly, wherein said fetching further comprises:
generating a first set of queries in response to said first request and a second set of queries in response to said second request;
executing said first set of queries to retrieve from said data store only a first data corresponding to said first set of objects and said second set of queries to retrieve from said data store only a second data corresponding to said second set of objects; and forming said first set of objects from said first data and said second set of objects from said second data.

Possibly, wherein said generating said first set of queries further comprises:
identifying that a first relationship exists between a first object type and a second object type, said first set of object types comprising said first object type and second object type, wherein said generating generates a first query comprised in said first set of queries based on said first relationship.

Possibly, wherein said identifying identifies said first relationship by
inspecting a configuration file specifying a plurality of relationships between said plurality of objects types.

Possibly, wherein said generating further comprises:
inspecting a fetch plan to determine that a first operation has to be used for fetching a third object type and a fourth object type, said first set of object types comprising said third object type and fourth object type; and
including said first operation in a second query for retrieving objects of said third object type and said fourth object type, wherein said first set of queries comprises said second query.

Possibly, further comprising:
generating programmatically by said fetch module, a first code module designed to perform said executing of said first set of queries to retrieve said first data and said forming said first set of objects from said first data; and
executing by said fetch module, said first code module to cause said first set of objects to be formed and sent to said fetch module,
wherein said fetch module provides said first set of objects received from said first code module to said first process module as a response to said first request.

Possibly, wherein said executing said first set of queries and said second set of queries and said forming said first set of objects and said second set of objects are performed using a Object Relationship Mapping (ORM) framework.

According to a second aspect, the invention is embodied in a machine readable medium storing one or more sequences of instructions for
causing a multi-tier application to fetch data from a data store, said one of more sequences of instructions comprising:
a first set of instructions representing a presentation tier of said multi-tier application,
said presentation tier comprising a plurality of web pages facilitating users to interact with said multi-tier application;
a second set of instructions representing a business logic tier of said multi-tier application, said business logic tier comprising a first process module implemented according to a first business use case, wherein said first business use case captures a first sequence of interactions between said multi-tier application and said users, wherein said first process module performs said first sequence of interactions with said users using said plurality of web pages; and
a third set of instructions representing a data access tier of said multi-tier application, said data access tier comprising a fetch module designed to perform the actions of:
   receiving a first request from said first process module specifying a first set of objects sought to be fetched from said data store, wherein said first request is sent by said first process module to facilitate a first interaction with said users, said first sequence of interactions comprising said first interaction;
   fetching, from said data store, only said first set of objects specified in said first request; and
   providing to said first process module, said first set of objects as a response to said first request.

Possibly, wherein for said fetching, said fetch
module comprises one or more instructions for:
generating a first set of queries in response to said first request;
executing said first set of queries to retrieve from said data store only a first data
corresponding to said first set of objects; and
forming said first set of objects from said first data.

Possibly, wherein for said generating, said fetch module comprises one or more instructions for:
identifying that a first relationship exists between a first object type of a first object and a second object type of a second object, said first set of objects comprising said first object and said second object,
wherein said generating generates a first query based on said first relationship, said first set of queries comprising said first query.

Possibly, wherein for said generating, said fetch
module comprises one or more instructions for:
inspecting a fetch plan to determine that a first operation has to be used for fetching a third object type of a third object and a fourth object type of a fourth object, said first set of objects comprising said third object and said fourth object; and
including said first operation in a second query for retrieving said third object and said fourth object, said first set of queries comprising said second query.

Possibly, wherein said fetch module further
comprises one or more instructions for:
generating programmatically a fourth set of instructions representing a first code module designed to perform said executing of said first set of queries to retrieve said first data and said forming said first set of objects from said first data; and
executing said first code module to cause said first set of objects to be formed and sent to said fetch module,
wherein said fetch module provides said first set of objects received from said first code module to said first process module as a response to said first request.

According to a third aspect, the invention is embodied in a system comprising:
a client system to enable users to interact with a multi-tier application;
a data store to store data sought to be fetched by said multi-tier application;
a server system to execute said multi-tier application, wherein said multi-tier application comprises:
   a first process module implemented according to a first business use case in a business logic tier of said multi-tier application, wherein said first business use case captures a first sequence of interactions between said multi-tier application and users using said client system;
   a fetch module implemented in a data access tier of said multi-tier application,
wherein said fetch module is operable to:
receive first request from said first process module specifying a first set of objects sought to be fetched from said data store, wherein said first request is sent by said first process module to facilitate a first interaction with said users, said first sequence of interactions comprising said first interaction;
fetch, from said data store, only said first set of objects specified in said first request; and
provide to said first process module, said first set of objects as a response to said first request.

Possibly, wherein for said fetching, said fetch module is operable to:
generate a first set of queries in response to said first request;
   execute said first set of queries to retrieve from said data store only a first data corresponding to said first set of objects; and
   form said first set of objects from said first data.

Possibly, wherein said fetch module is further operable to:
generate programmatically a first code module designed to said execute said first set of queries to retrieve said first data and said form said first set of objects from said first data; and
execute said first code module to cause said first set of objects to be formed and sent to said fetch module,
wherein said fetch module provides said first set of objects received from said first code module to said first process module as a response to said first request.

Possibly, wherein said first code module is designed to said execute
said first set of queries and said form said first set of objects using a Object Relationship Mapping (ORM) framework.

These aspects of the present invention facilitate in different respects optimal fetching of data to be implemented in a data access tier of a multi-tier application as described in more detail below with examples.

### Brief Description of the Drawings

Example embodiments of the present invention will be described with reference to the accompanying drawings briefly described below.

Figure 1 is a block diagram illustrating an example environment (computing system) in which several aspects of the present invention can be implemented.

Figure 2 is a block diagram illustrating the manner in which a multi-tier application is implemented in one embodiment.

Figure 3 depicts a portion of an object graph illustrating the object types implemented (and used) in a multi-tier application in one embodiment.

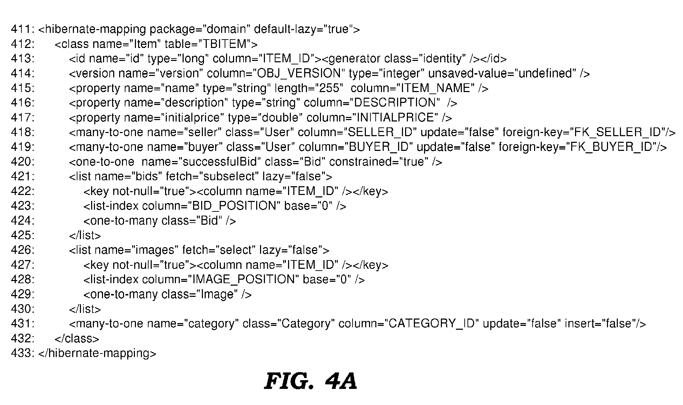

Each of Figure 4A-4B depicts a configuration file specifying an Object Relational Mapping (ORM) used for fetching of data in one embodiment.

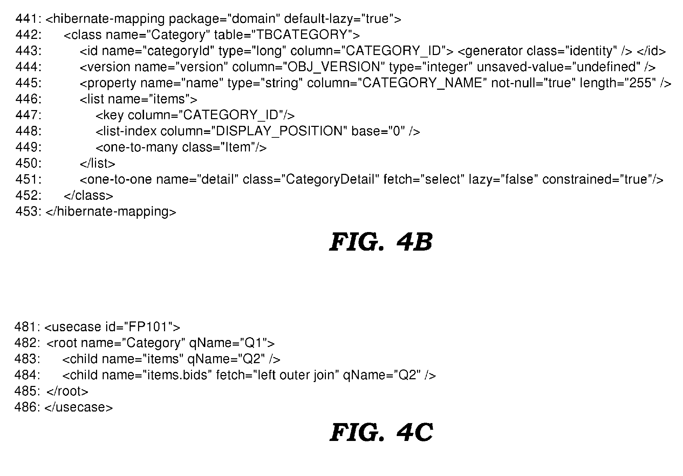

Figure 4C depicts a sample use case specific fetch plan used for fetching of data in one embodiment.

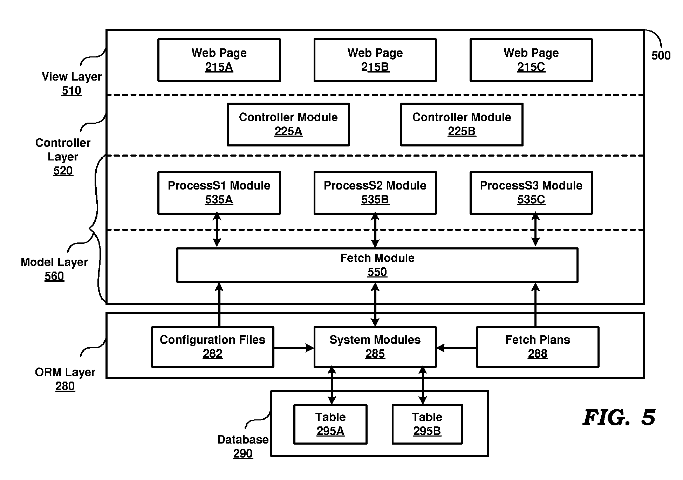

Figure 5 is a block diagram illustrating the manner in which a multi-tier application is implemented according to several aspects of the present invention.

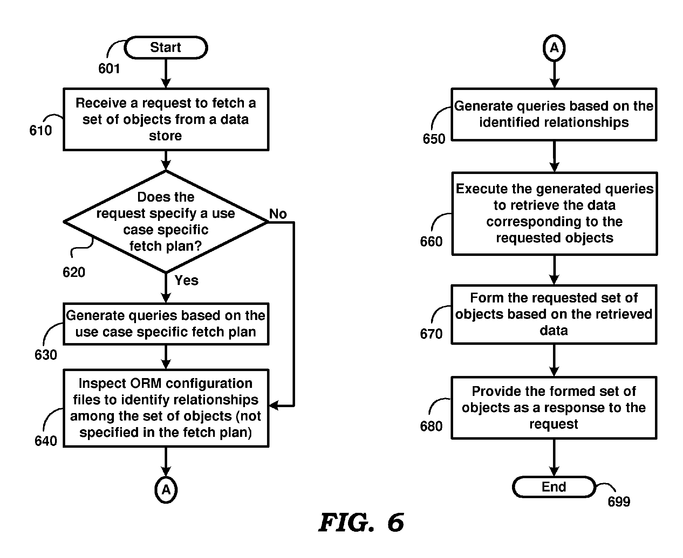

Figure 6 is a flowchart illustrating the manner in which optimal fetching of data (objects) in a multi-tier application is implemented in one embodiment.

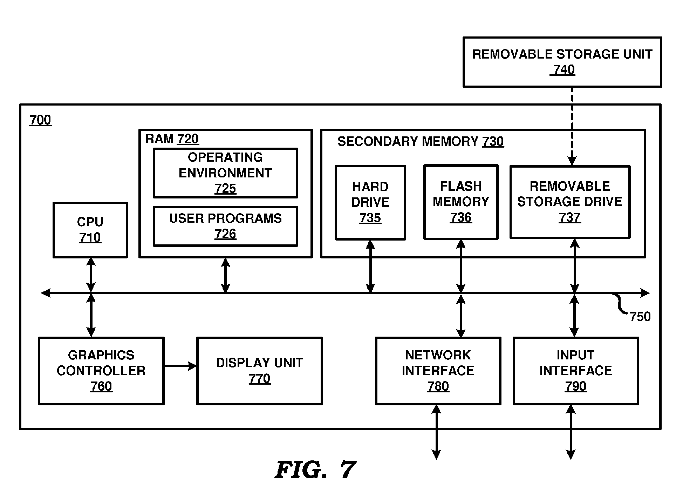

Figure 7 is a block diagram illustrating the details of a digital processing system in which various aspects of the present invention are operative by execution of appropriate executable modules.

In the drawings, like reference numbers generally indicate identical, functionally similar, and/or structurally similar elements. The drawing in which an element first appears is indicated by the leftmost digit(s) in the corresponding reference number.

### Detailed Description of the Invention

**1. Overview**

According to an aspect of the present invention, a fetch module implemented in a data access tier of a multi-tier application fetches from a data store only the set of objects specified by a request received from a process module implemented in a business logic tier of the multitier application, and provides the fetched objects as a response to the request. The business logic tier is a tier dedicated to comprise business logic defined for example by a business use case definition in the form of a sequence of interactions between a multi-tier application and a user and/or a set of predetermined rules and/or a set of predetermined parameters and/or a predetermined sequence of events and/or a predetermined set of functions. The set of objects specified in the request is according to the requirements of a business use case (specifying a sequence of interactions between the multi-tier application and users) according to which the process module is implemented. The requirements are defined by a set of business use case dependent parameters comprised in the business logic.

Accordingly, a single fetch module is controlled to provide only the requested (different) sets of objects as corresponding responses to requests received from different process modules in an efficient and highly maintainable manner, thereby facilitating optimal fetching of data to be implemented in a data access tier of a multi-tier application.

In one embodiment, the fetch module is designed to receive and accept a control parameter indicating the object types to be fetched, with the object types indicating the set of objects to be fetched. Each request may correspond to an invocation of the fetch module with an appropriate value for the parameter indicating the object types (a first value indicating a first set of object types/objects and a second value indicating a second set of object types/objects).

According to another aspect of the present invention, the fetching of a requested set of objects is performed (in the fetch module) by generating and executing a set of queries to retrieve from the data store only the data corresponding to requested set of objects and then forming the requested set of objects from the data retrieved from the data store.

In one embodiment, some of the queries are generated based on, i.e. dependent on, the relationships between the object types specified in a configuration file, while other queries are generated dependent on operations defined in a fetch plan, i.e. these other queries are generated based on inspection of a fetch plan and then including the operations determined (based on the inspection) to be used for fetching related object types.

According to one more aspect of the present invention, the fetch module programmatically generates a code module designed to perform the execution of the queries and the formation of the requested set of objects from the data retrieved by the execution of the queries. The fetch module then executes the generated code module to cause the requested set of objects to be sent to the fetch module. The fetch module then provides the received set of objects as the response to the request received from a process module implemented in a business logic tier of the multitier application.

Several aspects of the present invention are described below with reference to examples for illustration. However, one skilled in the relevant art will recognize that the invention can be practiced without one or more of the specific details or with other methods, components, materials and so forth. In other instances, well-known structures, materials, or operations are not shown in detail to avoid obscuring the features of the invention. Furthermore, the features/aspects described can be practiced in various combinations, though only some of the combinations are described herein for conciseness.

**2. Example Environment**

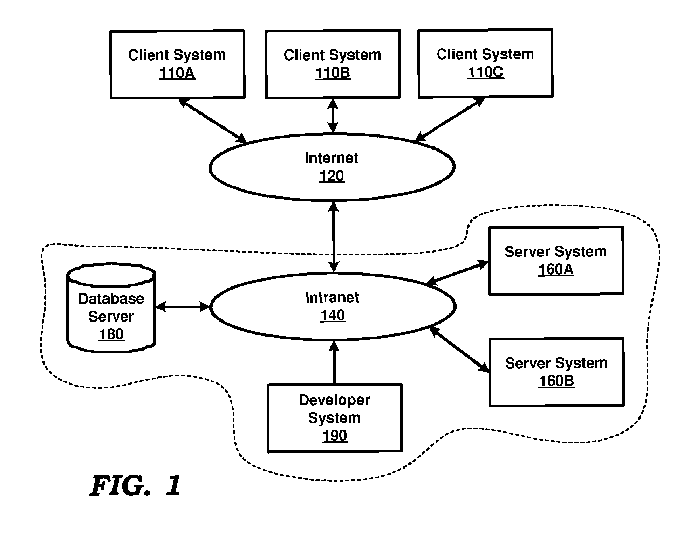

Figure 1 is a block diagram illustrating an example environment (computing system) in which several aspects of the present invention can be implemented. The block diagram shows client systems 110A-110C, Internet 120, intranet 140, server systems 160A-160B, database server 180 and developer system 190.

Merely for illustration, only representative number/type of systems is shown in the Figure. Many environments often contain many more systems, both in number and type, depending on the purpose for which the environment is designed. Each system/device of Figure 1 is described below in further detail.

Intranet 140 provides connectivity between server systems 160A-160B, database server 180 and developer system 190, all provided within an enterprise (shown with the dotted boundary). Internet 120 extends the connectivity of these (and other systems of the enterprise) with external systems such as client systems 110A-110C.

Each of intranet 140 and Internet 120 may be implemented using protocols such as Transmission Control Protocol (TCP) and/or Internet Protocol (IP), well known in the relevant arts. In general, in TCP/IP environments, a TCP/IP packet is used as a basic unit of transport, with the source address being set to the TCP/IP address assigned to the source system from which the packet originates and the destination address set to the TCP/IP address of the target system to which the packet is to be eventually delivered. An IP packet is said to be directed to a target system when the destination IP address of the packet is set to the IP address of the target system, such that the packet is eventually delivered to the target system by intranet 140 and Internet 120.

Each of client systems 110A-110C represents a system such as a personal computer, workstation, mobile station, etc., being provided with specifically designed software adapted to be used by users to generate client requests to enterprise applications executing in server systems 160A-160B. The requests may be generated using appropriate user interfaces. In general, a client system sends requests to an enterprise application, i.e. application software, for performing desired tasks and receives corresponding responses containing the results of performance of the requested tasks.

Database server 180 represents a non-volatile storage facilitating storage and retrieval of a collection of data by one or more enterprise applications executing in server systems 160A-160B (typically while processing various client requests). In one embodiment, database server 180 is implemented using relational database technologies and therefore provides storage and retrieval of data using structured queries such as SQL (Structured Query Language). SQL refers to a special-purpose, generally non-procedural language that supports the definition, manipulation, and control of data in systems implementing relational database technologies.

Each of server systems 160A-160B represents a server, such as a web/application server, executing enterprise applications capable of performing tasks requested by users using one of client systems 110A-110C. An enterprise application may perform the tasks on data maintained internally or on external data (e.g. stored in database server 180) and then send the result of performance of the tasks to the requesting client system. Each of server systems 160A-160B may also contain other software programs such as operating system, device drivers, etc., (not shown) that provides a (common) run time environment facilitating the execution of the enterprise applications.

As noted above, server systems 160A-160B, database server 180 (together with intranet 140 providing connectivity among the systems) may be implemented in a single "enterprise". In general, the combined systems/servers (excluding the network, which merely provides data transport) shown within the dotted area may be executing an enterprise application, with the various tiers of the enterprise application being executed on the various systems.

Developer system 190 enables developers/users to implement the desired multi-tier enterprise applications. The implemented multi-tier application may then be deployed on one or more of systems in the enterprise (such as server systems 160A-160B and/or database server 180) for execution. In general, developers implement a multi-tier enterprise application to include a data access tier that provides access (to higher level tiers in the application) to data stored in a persistent storage such as database server 180. The data access tier may be implemented to contain software modules designed to fetch (from the persistent storage) the specific data requested by the higher level tiers.

The manner in which a multi-tier application including a data access tier for fetching of data may be implemented (by developers using developer system 190) is described below with examples.

**3. Implementing a Multi-Tier Application**

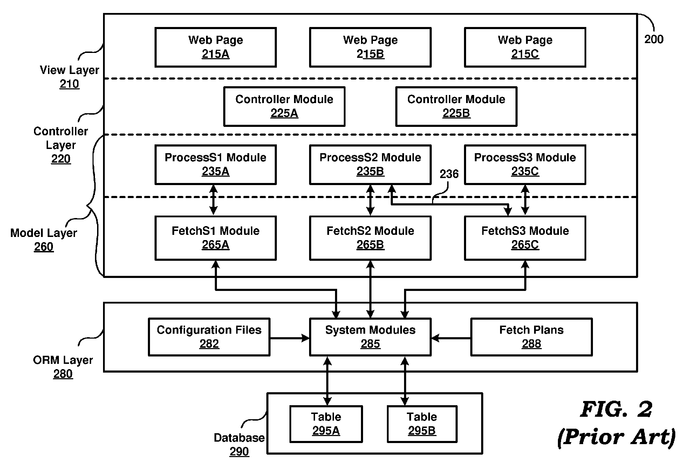

Figure 2 is a block diagram illustrating the manner in which a multi-tier application (200) is implemented in one embodiment. The description is continued by an example assuming that application 200 is implemented in Java programming environment according to Model View Controller (MVC) architecture, which facilitates applications to be developed in multiple tiers.

However, the features of the present invention may be implemented for other multi-tier applications implemented in other programming environments (such as .NET) and/or according to other architectures facilitating applications to be developed in multiple tiers as will be apparent to one skilled in the relevant arts by reading the disclosure provided herein.

Application 200 is shown containing view layer 210, controller layer 220 and model layer 260. View layer 210 is shown containing software modules that provide the user interface of the application, while controller layer 220 is shown containing software modules that control the flow of the application. Model layer 260 is shown containing software/process modules that implement the general computational aspects of the application and also software/fetch modules that provide access to data stored in a persistent storage (such as database server 180). The fetch modules are shown providing data access to data in tables 295A-295B of database 290 maintained in database server 180.

Accordingly, application 200 may be viewed as a four-tier application, with view layer 210 representing a presentation tier, controller layer 220 representing a controller tier, the process modules in model layer 260 representing the business logic tier and the fetch modules in model layer 260 representing the data access tier. The different layers/tiers may be deployed and executed on any of the systems in the enterprise. For example, view layer 210 may be deployed and executed in server system 160A (a web server), controller layer 220 and the process modules of model layer 260 may be deployed and executed in server system 160B (an application server) and the fetch modules of model layer 260 may be deployed and executed in server system 160B (an another application server not shown in Figure 1).

View layer 210 (providing the user interface of application 200) is shown containing web pages 215A-215C, each of which provides a corresponding portion of the user interface and is accessible using a corresponding Uniform Resource Locator (URL). Web pages 215A-215C may be implemented using one or more of hypertext markup language (HTML), Java server pages (JSP), Java Server Faces (JSF), etc. In an alternative embodiment, the user interface may be implemented using Java components such as Swing, and/or extensible markup language (XML).

Controller layer 220 is shown containing software/controller modules 225A-225B which control the flow of the application. Each of controller modules 225A-225B contains software instructions and/or data implemented according to a desired manner of presenting the web pages in view layer 210, i.e. computer program code portions that are devised to control the a data processing unit inter alia to present web pages in the view layer in a certain manner. The desired manner may include the specific web pages to be displayed when
links in another web page are clicked/ selected by the user, the page to be displayed when errors occur during execution/user interaction, etc. Controller modules 225A-225B may be implemented as Java Servlets, Apache Jakarta Struts controllers, JSF (Java Server Faces) controllers, etc.

Thus, the web pages in view layer 210 and the controller modules in controller layer 220 operate together to facilitate users using client systems 110A-110C to interact with application 200. In particular, application 200 sends web pages in response to receiving client requests (from users using client systems 110A-110C) containing the corresponding URLs. The web pages may then be displayed by a browser on a display unit (not shown in Figure 1) associated with the requesting client system. The controller modules may cause application 200 to provide additional web pages in response to the user selecting specific links/performing specific actions in the displayed web pages. Accordingly, users using client systems 110A-110C are enabled to interact with application 200.

In one common approach, the interactions that users can perform with application 200 are captured using one or more predetermined or predefined business use cases. Each business use case specifies possible sequences of interactions between application 200 and a user in a predefined role (e.g. normal user, administrator, group leader, etc.) for accomplishing a task. It is generally desirable that application 200 be implemented consistent with the various business use cases specified for the application.

The implementation of each business use case may entail capturing the interactions specified by the business use case and also performing the necessary processing/computations associated with the interactions. In one embodiment, the interactions between the system and a user are implemented in the controller modules of controller layer 220, while the processing associated with the interactions for each business use case is implemented as corresponding process modules (containing software instructions according to Java programming language) in model layer 260.

Thus, each of process modules 235A-235C (respectively named "ProcessS1 Module", "ProcessS2 Module" and "ProcessS3 Module") shown in model layer 260 is designed and controlled to perform the computations associated with the possible sequences of interactions specified in a corresponding business use case. As part of such processing/computations, each process module may also be designed to store/fetch a corresponding data set (shown as S 1, S2, S3, etc.) based on the business use cases implemented.

Accordingly, model layer 260 is shown containing fetch modules (such as 265A-265C) that are implemented consistent with the underlying storage type/mechanism, type of services used to access the underlying data, etc. Higher level tiers (such as the business logic tier containing process modules 235A-235C) are typically designed to access the data using such fetch modules, thereby enabling the data access functionality in the higher level tiers to be implemented independent of the underlying storage technique/mechanism.

In a typical implementation, each of fetch modules 265A-265C is implemented according to a corresponding method (e.g. according to Java programming language) designed to receive and accept input parameters specifying the conditions (e.g. "categoryId < 100") to be satisfied by the objects sought to be fetched by the fetch module. Higher level modules may send requests for fetching the corresponding data set by invoking the appropriate fetch methods and receive the requested data set as a corresponding response (as indicated by the bi-directional arrows between a process module and a fetch module).

Thus, the modules in view layer 210, controller layer 220 and model layer 260 operate together to form multi-tier application 200. In general, on receiving a request for performing an interaction with a web page in view layer 210, a corresponding controller module (capturing the requested interaction) in controller layer 220 is invoked, which in turn may invoke a process module in model layer 260 for performing computations associated with the requested interaction. The invoked process module may in turn invoke a corresponding fetch module in model layer 260 for fetching the data set required for the business use case. On successful fetching of the required data, the process module performs the associated computations and the controller module then provides the results of the interaction to the user (using the same or different web page).

The number/type of modules in the different layers/tiers of the multi-tier application may be implemented consistent with providing the various interactions sought to be performed by application 200. The manner in which the modules in the different layers/tiers of application are implemented according to prior approaches is described below with examples.

**4. Prior Approaches**

In a first prior approach, a fetch module in model layer 260 is implemented to fetch the data set required for a single business use case and accordingly, is invoked by the corresponding process module implementing the business use case (as indicated by the respective bi-directional arrows between process modules 235A-235C and fetch modules 265A-265C). Each fetch module may be implemented to provide efficient fetching of the corresponding data set.

For example, FetchS1 Module 265A is implemented to fetch data set S1 (required for a first use case) and accordingly is shown invoked by ProcessS1 Module 235A (implementing the first use case). Similarly, FetchS2 Module 265B and FetchS3 Module 265C are implemented to respectively fetch data sets S2 and S3 and accordingly are shown respectively invoked by ProcessS2 Module 235B and Process S3Module 235C. In general, the different data sets sought to be fetched manifests in the names of the modules, such as module 265A being named "FetchS1 Module" to indicate that the module fetches data set S1.

It may be appreciated that such an approach may necessitate a large number of fetch modules to be implemented in model layer 260, for example, when application 200 has a large number of business use cases (typically more than 300). Such a large number of modules (and accordingly, a substantial number of lines of code) may result in the software instructions forming the data access tier to have low maintainability, that is, users other than the original developer need to spend considerable amount of resources and/or time to understand and modify the instructions. Embodiments of the invention solve this problem.

The low maintainability may also be due to the duplication of functionality and/or lines of code in multiple fetch modules, which necessitates users other than the original developer to keep track of such duplications and to modify all the duplicated functionality/lines of code consistently. Furthermore, the requirement to implement fetch modules corresponding to each business use case may make it difficult for the different developers to choose an appropriate naming convention for the fetch modules. Embodiments of the invention solve this problem.

In a second prior approach, the number of fetch modules implemented in model layer 260 is reduced (thereby making the data access tier more maintainable) by using a common fetch module to fetch different sets of data. For example, in a scenario where a data set (e.g. S2) is a subset of another data set (e.g. S3), the subset data set S2 may be fetched using the fetch module for S3 (as indicated by the bi-directional arrow 236).

Thus, ProcessS2 Module 235B and ProcessS3 Module 235C are shown using FetchS3 Module 265C for fetching respective data sets S2 and S3. FetchS3 Module 265C may be designed to fetch data set S3 (irrespective of whether data set S2 or S3 is requested) and to provide only the requested portions (such as S2 or S3) of the data set to the requesting process modules (based on the value of an input parameter). Accordingly, ProcessS2 Module 265B may be removed, thereby reducing the number of fetch modules implemented in model layer 260.

It may be appreciated that such an approach may result in fetching of additional data from database 290. For example, when data set S2 is requested to be fetched by ProcessS2 Module 235B, the FetchS3 Module 265C fetches data set S3 that contains data that is not needed (due to S3 being a superset of S2) according to the requirements of the business use case implemented in ProcessS2 Modules 235B. Such fetching of additional data may result in inefficient fetching of the data. Embodiments of the invention solve this problem.

Thus, it may be appreciated that the prior approaches described above do not provide optimal fetching of data. For example, the first prior approach fetches only the requested data according to the requirements of a business use case in an efficient manner while having low maintainability and the second prior approach though having higher maintainability fetches data in addition to the requested data (and accordingly, inefficient).

Several additional challenges may be presented when the data sought to be fetched is in the form of objects. The types/objects that may be implemented/used by a multi-tier application (200) is first described, followed by the additional challenges in fetching objects in a data access tier of the multi-tier application.

**5. Object Graph**

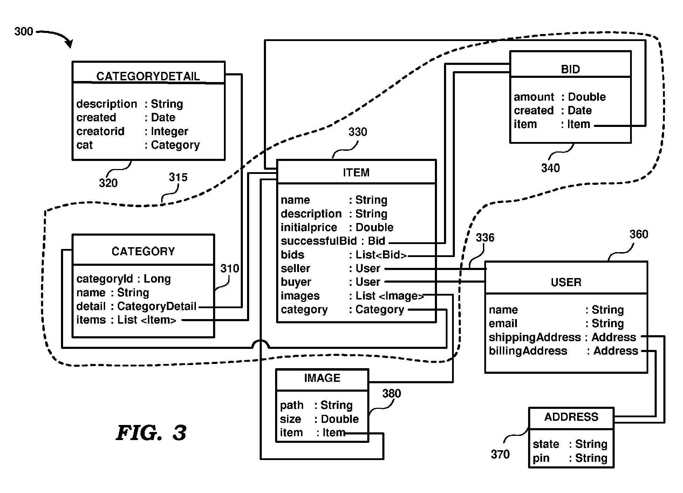

Figure 3 depicts a portion of an object graph illustrating the object types implemented (and used) in a multi-tier application (200) in one embodiment. As is well known in object oriented paradigm, an "object type" refers to the structure/template specifying the collection of attributes and methods/procedures which capture the states and/or behaviors of an entity (in a real/virtual world), while the term "object" refers to specific association of data with the attributes/methods of an object type.

Object graph 300 is shown containing various object types (for example referred to as "classes" in Java programming environments) and the relationships between the object types. Application 200
may create and use one or more objects (referred to as "instances" in Java programming environments) of each object type. Object graph 300 may contain a large number of object types (though only a few are shown for conciseness) depending on the purpose for which the enterprise application is designed.

Broadly, each object type/class is shown as a corresponding box with two sections, the upper section specifying the name of the object type and the lower section specifying the attributes (each attribute being in the form "name : type") contained in the object type. Thus, object type 330 is named "ITEM" (as indicated by the upper section) and is showing containing the attributes named "name" (of type "String"), "description" (of type "String"), etc. (in the lower section).

It may be observed that some of the attributes of an object type may be of another object type contained in object graph 300. In other words, the attribute of the object type may refer to an object of the other object type. For example, the attribute "Seller" of ITEM 330 is shown to be of the object type USER (360 in object graph 300), indicating that the attribute "seller" refers to an USER object. Accordingly, the object type ITEM 330 may be viewed as having a "relationship" (as indicated by 336) with the object type USER 360. The various relationships that may exist between the object types of object graph 300 is shown as corresponding lines (similar to 336) between the attribute (in the object type) and the name of the (another) object type. Such attributes (such as "detail" and "items" in object type 310, "category", "seller", "bids" and " images" in object type 330, etc.), that specify relationships between the object types of object graph 300 are referred to as relationship attributes.

Different types of relationships such as "one-to-one" (or "many-to-one"), "one-to-many", "many-to-many", etc. (based on the number of objects that are related) may be defined between the object types. For example, the attribute "seller" in ITEM 330 defines a one-to-one (or many-to-one) relationship with USER 360, since one ITEM object can refer to only one USER object (and multiple ITEM objects may refer to the same USER object). The attribute "images" in ITEM 330 is specified as a list of objects (as indicated by "List<...>") of IMAGE 380, and accordingly defines a one-to-many relationship between ITEM and IMAGE object types. Though not shown, many-to-many mappings may also be similarly specified between the object types of object graph 300.

Thus, object graph 300 specifies the various object types implemented in application 200 whose instances/objects can be created and used by the various modules contained in application 200. Each of the data set required for a business case may contain sets of objects of different object types. For example, data set S1 may correspond to objects of type {CATEGORY}, data set S2 may correspond to objects of types {CATEGORY, ITEM, BID} and data set S3 may correspond to objects of types {CATEGORY, ITEM, BID, IMAGE}. It may be observed that each of the data sets forms a sub-graph (as indicated by the dotted boundary 315 corresponding to data set S2) of object graph 300.

The manner in which the objects of the different objects types are fetched by application 200 and the additional challenges posed by such fetching of objects are described below with examples.

**6. Object Relational Mapping (ORM)**

Referring back to Figure 2, Object Relational Mapping (ORM) layer 280 facilitates storage and retrieval of data in the form of objects, in particular, when the underlying database 290 is implemented in the form of tables (295A-295B) containing columns according to relational database technologies. ORM layer 280 generally facilitates conversion of data in the form of object types/objects/attributes from/to data in the form of tables/rows/columns. ORM layer 280 is typically shared by multiple applications, and is accordingly shown external to application 200.

The description is continued assuming that ORM layer 280 is implemented using the Open Source Hibernate framework available from JBoss Community, which is described in detail in the book titled "Java Persistence with Hibernate" by Christian Bauer and Gavin King having ISBN number 1-932394-88-5. However, the features of the present invention may be implemented for other ORM frameworks (such as TopLink, Kodo, Cayenne, etc.) as will be apparent to one skilled in the relevant arts by reading the disclosure provided herein.

ORM layer 280 is shown containing configuration files 282, system modules 285 and fetch plans 288. Configuration files 282 specify the mappings between the object types/attributes (such as CATEGORY, ITEM, BID, etc) used/implemented by application 200 and the corresponding tables/columns (such as 295A and 295B) in database 290. Example configuration files that may be specified in ORM layer 280 is described below with examples.

7. **ORM Configuration Files**

Each of Figure 4A-4B depicts a configuration file (one of configuration files 282) specifying an Object Relational Mapping used for fetching of data in one embodiment. The configuration files are specified according to the format required for Hibernate Framework (as indicated by "<hibernate-mapping>" tags in lines 411 and 441). The detailed description of the configuration file format of Hibernate Framework is provided in the above noted book and in the Hibernate Documentation available from JBoss Community.

Broadly, each configuration file specifies the mapping for a single object type, and accordingly the number of configuration files (in 282) may be equal to the number of object types in object graph 300. Each configuration file has a "<class>" tag (e.g. line 412) specifying a mapping between object type/class (value of the attribute "name") and a corresponding table in database 290 (the value of the attribute "table"). The class mapping/tag may also include multiple "<property>" tags (e.g. lines 415-417), with each property tag specifying a mapping between an attribute of the specified object (value of the attribute "name") and a column in the specified table (value of the attribute "column").

The class mapping/tag may also include "relationship" tags such as "<list>", "<one-to-one>", "<many-to-one>" (e.g. lines 421, 420, 431, etc.) for specifying the related objects (the value of the attribute "class" indicating the object type of the related objects). It may be observed that the relationship tags specify the relationships shown as lines (such as 336) in object graph 300 of Figure 3.

Thus, the configuration file of Figure 4A specifies a mapping between the object type ITEM and the table "TBITEM" (line 412), with various attributes such as name, description, etc. of ITEM object type mapped to corresponding columns such as "ITEM_NAME", "DESCRIPTION", etc. (as shown in lines 415-417). The ITEM object type is also specified as having a many-to-one relationship with the USER object type (lines 418-419), as well as containing a list of BID objects (lines 421-425) and a list of IMAGE objects (line 426-430).

Similarly, the configuration file of Figure 4B specifies the details of a mapping between the objects type "CATEGORY" and the table "TBCATEGORY" (in lines 442-452). It may be observed that lines 446-450 specifies a one-to-many mapping between CATEGORY type and ITEM type and line 431 of Figure 4A specifies the corresponding many-to-one mapping.

A developer of the multi-tier application 200 may similarly specify configuration files 282 indicating the mappings between the (other) object types/classes implemented/used by application 200 (such as "BID", "IMAGE", "USER", etc.) and the tables (such as 295A-295B) in database 290. The mappings may be used for storing/retrieving data in the form of objects as described below with example.

**8**. **Fetching of Objects**

Referring back to Figure 2, system modules 285 are designed to receive requests for storing/fetching specific objects, identify the relational data (table, columns, etc.) corresponding to the requested objects based on the mapping specified in configuration files 282, form structured queries (e.g. according to SQL) for storage/retrieval of identified data, and perform the structured queries on database 290. In a scenario that the objects are sought to be fetched, system modules 285 also form requested objects from the data retrieved by the performance of the structured queries and provide the requested objects to the requesting modules in higher tiers (210 and 220) of application 200.

In a typical implementation, system modules 285 are exposed to the different applications in the form of an Application Programming Interface (API). Furthermore, the requests for storing/fetching objects may be required to be specified as queries according to a query language specific to the ORM framework (e.g., Hibernate Query Language (HQL) for the Hibernate framework). Accordingly, each of the fetch modules implemented in the data access tier (model layer 260) may be designed to invoke the appropriate system modules (multiple times, if necessary) with the appropriate HQL queries to fetch the desired objects.

The request/invocation of the system modules and the corresponding responses sent by the system modules are represented as bi-directional arrows between fetch module 265A-265C and system modules 285. The single directional arrow between configuration files 282 (and also fetch plans 288) and system modules 285 indicates that the data stored in the configuration files (and the fetch plans) are merely accessed/used by system modules 285, and that the data is not modified by system modules 285.

One challenge with fetching objects (of the object types shown in object graph 300) is the determination of the related objects that need to be fetched along with the objects requested to be fetched. For example, when ITEM objects are requested to be fetched, ORM layer 280 may need to determine which of the BID objects (for "bids" attribute), USER objects (for "seller" and "buyer" attributes), the IMAGE objects (for "images" attribute) need to be fetched along with the requested ITEM objects.

In one embodiment, ORM layer 280 is designed and controlled to implement "lazy" fetching of objects, where a related object is fetched only if the corresponding relationship attribute is accessed in
application 200. Such lazy fetching may be enabled by default (as indicated by value "true" for the attribute "default-lazy" in lines 411 and 441), implying that all related objects are fetched only when the corresponding relationship attribute is accessed. In this embodiment, the fetching of an object is performed dependent on a detected access in application 200 of the corresponding relationship attribute.

Accordingly, for the above noted request, ORM layer 280 may fetch and provide only the ITEM objects to application 200 in response to the request, monitor whether the corresponding relationship attributes (such as "bids", "seller", etc.) of the provided ITEM objects are accessed, and then fetch and provide the related (BID/USER) objects in response to such access. Though "lazy" fetching fetches related objects, it may be desirable that the related objects be fetched along with the requested objects in the response to the request.

**9. Fetch Plans**

Fetch plans facilitate a developer to indicate the related objects to be fetched along with the requested objects, thereby overcoming the challenge noted above. For example, Hibernate framework enables a developer to specify a global fetch plan (applicable to all business cases of an application) in configuration files 282.

Referring to Figure 4A, it may be observed that relationship tags such as "<list>", "<one-to-one>", "<many-to-one>" (e.g. lines 421, 426, 451, etc.) in addition to specifying the related objects (value of the attribute "class") to be fetched, also indicate that the objects are to be fetched immediately (value "false" for the attribute "lazy") along with the objects requested and the specific query format (such as "select", subselect", etc. specified as the value of the attribute "fetch") to be used for fetching the related objects.

For example, line 421 in Figure 4A indicates that the BID objects are to be fetched immediately along with the ITEM objects and the data corresponding to the BID objects are to be retrieved using a "subselect" query format (having a "SELECT" command in the 'WHERE" clause of another "SELECT" command as is well known in database environments). Similarly, line 451 in Figure 4B indicates that the CATEGORYDETAIL object related to the CATEGORY object are to be retrieved using a "select" query format (having a "SELECT" command).

System modules 280 may be designed to use the global fetch plan specified in configuration files 282 when processing requests for objects received from application 200 (in particular, fetch modules 265A-265C). For example, in response to a request for ITEM objects, system modules 280 may be designed to generate the queries according to the global fetch plan for retrieving data corresponding to both ITEM and BID objects and to form/provide the requested ITEM objects and the related BID objects with the data retrieved by performance of the queries.

It may be appreciated that the global fetch plan specified in configuration files 282 remains the same for all the business use cases. For example, for the global fetch plan specified in the configuration files of Figures 4A and 4B, IMAGE objects related to the ITEM objects are always fetched, though only the ITEM objects may be required to be fetched according to a business use case (e.g., for data set S2). Thus, a global fetch plan specified for all business use cases may not provide optimal fetching of data due to the additional data being fetched for specific business use cases.

**10. Use Case Fetch Plans**

Referring again to Figure 2, each of fetch plans 288 represents a use case specific fetch plan which indicates the specific relationship attributes (and accordingly, the related objects) of the requested object to be fetched for corresponding one of the business use cases specified for application 200. The fetch plan may also specify the specific query operator (such as "inner join", "left outer join", etc.) to be used for retrieving the data corresponding to related objects for the corresponding business use case. An example of a use case specific fetch plan is described in detail below.

Figure 4C depicts a sample use case specific fetch plan (one of fetch plans 288) used for fetching of data in one embodiment. Though the sample fetch plan is shown as being specified according to extensible markup language (XML), it may be appreciated that in alternative embodiments, the fetch plan may be according to any convenient data format.

Lines 481-486 (tag "<usecase>") specify the details of a use case specific fetch plan (identified by the identifier "FP101", the value of attribute "id" in line 481) for fetching data (data set S2) according to the requirements of a business use case. Line 482 (tag "<root>") indicates that the fetch plan is to be used when objects of object type CATEGORY (the value of attribute "name") are sought to be fetched. The value "Q1" of attribute "qName" indicates the specific query using which the root (CATEGORY) objects are to be retrieved.

Each of lines 483-484 (tag "<child>") indicates the specific attributes of the root object type that is to be fetched (thereby indicating the related objects to be fetched), the specific query operator (value of the attribute "fetch") to be used for fetching the related object and the specific query (value of the attribute "qName") in which the related objects are to be fetched. For example, line 483 indicates that the attribute "items" (and accordingly the related object of object type ITEM as shown in 310 in Figure 3) is to be fetched, and that the related object is to be fetched in the query named "Q2". Similarly, the other lines indicate the corresponding attributes (related objects) to be fetched along with the root objects.

It may be observed in line 484 that the attribute is specified as "items.bids", indicating that the attribute "bids" of the ITEM objects (as shown in 330) referred to by the attribute "items" of CATEGORY objects (as shown in 310) are to be fetched. It may be noted that the fetching of "items" and "items.bids" are to be performed using a separate query, since the query name is indicated to be "Q2", different from the name "Q1" used to fetch the CATEGORY objects (as indicated in lines 482).

Thus, the use case specific fetch plan of Figure 4C specifies the various relationship attributes (related objects) to be fetched along with a specific root object and query operators to be used to perform the fetching in an efficient manner.

Developers may similarly specify other fetch plans (288) indicating the desired object types (and attributes) to be fetched from database 290 for corresponding business use cases (for example, for fetching the data sets S1 and S3). For example, a first fetch plan may indicate that only the related USER objects are to be fetched along with ITEM objects, while a second fetch plan may indicate that both the related BID and IMAGE objects are to be fetched along with ITEM objects.

It may be appreciated that a use case fetch plan (specific to one business use case) may also be used for fetching objects for other business use cases, for example, when the corresponding data sets (e.g. S3) fetched for the other business use cases is a superset of the data set (e.g. S2) specified in the use case fetch plan.

System modules 280 may be designed to use fetch plans 288 (in place of the global fetch plan specified in configuration file 282) when processing requests for objects received from application 200 (in particular, fetch modules 265A-265C). For example, in response to a request for ITEM objects using the first fetch plan (also indicated in the request), system modules 280 may be designed to generate the queries according to the first fetch plan (for example, to retrieve the data corresponding to the ITEM objects and the related USER objects) and to form/provide the (ITEM/USER) objects with the data retrieved by performance of the queries.

Accordingly, the use case specific fetch plans 288 may be used (instead of a global fetch plan) to fetch only the requested data according to the requirements of a business use case in an efficient manner.

However, it may be appreciated that such an approach may necessitate a large number of fetch plans to be specified similar to the first prior approach noted above), thereby resulting in low maintainability of application 200. The fetch plans being specified external to the application may also result in reducing the maintainability of application 200.

Accordingly, it may be desirable that optimal fetching of data be implemented in a data access tier (model layer 260) of a multi-tier application (200) while overcoming the drawbacks of the prior approaches as well as challenges noted above. In other words, it may be desirable that only the data required/requested by the higher level tiers be fetched in a highly efficient and (code) maintainable manner.

**11. Embodiments Using the Inventive Approach**

Figure 5 is a block diagram illustrating the manner in which a multi-tier application is implemented according to several aspects of the present invention. Multi-tier application 500 represents application 200 modified according to several aspects of the present invention. Application 500 is shown containing view layer 510, controller layer 520 and model layer 560. Model layer 560, in turn is shown containing process modules representing the business logic tier and a fetch module representing the data access tier.

View layer 510 and controller layer 520 are similar to view layer 210 and controller layer 220 of application 200 and accordingly the same web pages (215A-215C) and controller modules 225A-225B are shown in the corresponding layers. It may be appreciated that the provision of the same web pages and controller modules indicates that user interactions for both application 200 as well as application 500 are captured by the same business cases.

Model layer 560 is shown containing process modules 535A-535C implementing the computations associated with the business use cases for application 500. Accordingly, process modules 535A-535C may contain program logic similar to that in process modules 235A-235C shown in controller layer 220. Furthermore, each of process modules 535A-535C may fetch the respective one of data sets S1, S2 and S3. For example, process module 535C may fetch data set S3 containing the objects of types {CATEGORY, ITEM, BID, IMAGE}. However, each process module (including 535A-535C) is designed to invoke a single fetch module 550 (in model layer 560) to fetch the desired set of objects according to the requirements of the specific business use case.

Fetch module 550, provided according to an aspect of the present invention, facilitates optimal fetching of data in the data access tier (in model layer 560) of a multi-tier application (500). Fetch module 550 is designed and controlled to receive multiple requests (from process modules forming the higher tier) specifying corresponding sets of objects to be fetched, and to fetch only the requested sets of objects (from database 290 using the underlying ORM layer 280) and to provide the fetched set of objects to the requesting process modules.

It is noted that the set of objects (specified in the request) also includes the related objects, thereby enabling fetch module 550 to fetch only the objects according to the requirements of a business use case. Accordingly, fetch module 550 may require only configuration files 282 for the fetching of the requested objects, and additional information such as fetch plans 288 may not be necessary for processing the requested set of objects (though in the below described implementation, use case specific fetch plans are used for convenience).

Fetch module 550 may be designed and controlled to receive the specific set of objects to be fetched as a corresponding value for a parameter from the process modules of controller layer 520. The specific set of objects may be specified using a sub-graph of the object graph, with the sub-graph indicating the object types of the objects (including the related objects) to be fetched.

For example, ProcessS1 Module 535A may invoke fetch module 550 with the value "{CATEGORY}" for the parameter indicating that only the objects of object type CATEGORY are to be fetched. ProcessS2 Module 535B may invoke same fetch module 550 with the value "{CATEGORY, ITEM, BID}" for the parameter indicating that objects of object type CATEGORY and its related objects of object type "ITEM" and the related objects (of the ITEM objects) of object type BID are to be fetched. ProcessS3 Module 535C may invoke same fetch module 550 with the value "{CATEGORY, ITEM, BID, IMAGE}" for the parameter indicating that objects of object type CATEGORY, its related objects of object type ITEM, BID and IMAGE are to be fetched.

It may be observed that the different data sets sought to be fetched manifests as different values for a parameter, in contrast to the prior approaches noted above, where the different data sets manifests in the names of different fetch modules. Such manifestation as different parameter values facilitates users other than the original developer to make modifications to only the data sets sent as the value of the parameter in response to changes in the business use cases of application 500, thereby making the single fetch module implementation more maintainable.

It may be appreciated that fetch module 550 represents a single module designed to fetch only the sets of objects requested (by process modules) according to the requirements of corresponding business use cases. The single module implementation further results in higher efficiency (as described below with respect to Figure 6) and making the data access tier be highly maintainable (as there is no duplication of code, less lines of code, etc.), in contrast to the first prior approach noted above.

Furthermore, though fetch module 550 is shown as being invoked by multiple process modules (for fetching data set S2, a subset of data set S3), it is noted that fetch module 550 is designed to fetch only data set S2 from database 290 in response to invocation by ProcessS2 Module 535B and only data set S3 in response to invocation by ProcessS3 Module 535C, even when data set S2 is a subset of data set S3. No additional data is fetched when processing the request for data set S2, in contrast to the second prior approach noted above.

The manner in which fetch module 550 may be implemented to provide optimal fetching of data in a data access tier (model layer 560) of a multi-tier application (500) is described below with examples.

**12. Optimal Fetching of Data In a Multi-Tier Application**

Figure 6 is a flowchart illustrating the manner in which optimal fetching of data (objects) in a multi-tier application is implemented in one embodiment. The flowchart is described with respect to Figures 4A-4C, 5 merely for illustration. However, the features can be implemented in other environments also without departing from the scope and spirit of various aspects of the present invention, as will be apparent to one skilled in the relevant arts by reading the disclosure provided herein.

In addition, some of the steps may be performed in a different sequence than that depicted below, as suited to the specific environment, as will be apparent to one skilled in the relevant arts. Many of such implementations are contemplated to be covered by several aspects of the present invention. The flow chart begins in step 601, in which control immediately passes to step 610.

In step 610, fetch module 550 receives a request to fetch a set of objects from a data store. The request may be received from one of process modules 535A-535C present in controller layer 520 (higher tier) of application 500. The set of objects requested to be fetched corresponds to the data required for a business use case implemented by the process module and includes the related objects that are required for the business use case.

In one embodiment, fetch module 550 is implemented as a method/function (hereafter referred to as "fetch method") that takes as input, a first parameter indicating the root object type sought to be fetched, a second parameter in the form of a relationship map specifying the relationship attributes (which in turn indicate the related objects/ object types) that are to be fetched in the root objects as well as the corresponding query operator to be used (similar to the use case specific fetch plan described above), a third parameter specifying a condition for selecting the root/related objects, and a fourth parameter specifying the identifier of a use case specific fetch plan to be used for fetching the objects. The fetch method is designed to provide the set of objects matching the input parameters as the output.

Accordingly, a process module may send a request to fetch desired set of objects by invoking the fetch method with appropriate parameter values (corresponding to the four input parameters). It may be appreciated that the set of objects to be fetched may be specified in the relationship map (the second parameter), the fetch plan identified by the fetch plan identifier (the fourth parameter) or a combination of both.

For example, ProcessS3 Module 535C may invoke the fetch method with the respective parameter values "Category", "{'items.images': 'left outer'}", "categoryId<100" and "FP101" (hereafter referred to as the "first invocation") indicating that CATEGORY objects (first parameter value) whose id is less than 100 (third parameter value) are to be fetched along with the related ITEM and BID objects (as specified by the fetch plan shown in Figure 4C identified by the identifier "FP101", the fourth parameter value) as well as the related IMAGE obj ects (using the query operator "left outer" join as indicated by the second parameter value). Thus, the set of objects to be fetched is specified in the combination of the relationship map and the fetch plan.

Alternatively, ProcessS3 Module 535C may invoke the fetch method with the respective parameter values, "CATEGORY", "{'items': 'left outer', 'items.bids': 'left outer', 'items.images': 'left outer'}", "categoryId<100" and "" (hereafter referred to as the "second invocation"), where the relationship map (second parameter value) specifies that the ITEM, BID and IMAGE objects are to be fetched along with the CATEGORY objects (as well as the corresponding query operators to be used), while the empty value "" of the fourth parameter indicates that no use case specific fetch plan is specified for the specific business use case. Thus, in the second invocation, the set of objects to be fetched is specified in the relationship map only.

In the below description, it is assumed that fetch module 550 is implemented according to the embodiment noted above, and accordingly, the below steps of Figure 6 are described with respect to values of the four parameters of the fetch method. However, in alternative embodiments, fetch module 550 may be implemented and controlled to receive less/more information from the business logic tier (e.g. as a method/function with less/more parameters or as a class) and the steps of Figure 6 may be appropriately modified as will be apparent to one skilled in the relevant arts by reading the disclosure herein. For example, additional information indicating the specific attributes to be the fetched for each object type may be received as part of the request (e.g. as a fifth parameter), thereby enabling subsets of attributes of an object/object type are to be fetched.

In step 620, fetch module 550 determines whether the request (received in step 610) specifies a use case specific fetch plan to be used for fetching the objects. The fetch plan specified in the request may correspond to one of fetch plans 288 specified in ORM layer 280.

In the fetch method embodiment, fetch module 550 determines whether the request specifies a use case based on the value of the fourth parameter, with an empty value "" indicating that no fetch plan is specified and a non-empty value (such as "FP101") indicating the specification of a fetch plan. Control passes to step 630 if fetch module 550 determines that the request specifies a use case fetch plan (e.g., first invocation) to be used for fetching the set of objects and to step 640 otherwise (e.g., second invocation).

In step 630, fetch module 550 generates queries based on the use case specific fetch plan specified in the request. Fetch module 550 may first examine the contents of the specific fetch plan and then generate one or more queries based on the query names specified in the fetch plan and query operators specified in the fetch plan.

Accordingly, for the first invocation, fetch module 550 examines the contents of the fetch plan shown in Figure 4C (based on the identifier "FP101" specified in the request) and then generates the following queries according to HQL:

SELECT c [A1]

FROM Category c

WHERE c.categoryId < 100;

SELECT i [A2]

FROM Item i LEFT OUTER JOIN FETCH i.bids

WHERE i.category.categoryId=:categoryId;

The first select query A1 is generated for fetching the CATEGORY objects as indicated by line 482 of Figure 4C, while the second select query A2 is generated for fetching the related ITEM, and BID objects using the "LEFT OUTER JOIN" operator as indicated by lines 483-484. Fetch module 550 generates two different queries A1 and A2 based on the different query names "Q1" and "Q2" specified in the fetch plan of Figure 4C.

It may be appreciated that A1 represent a single query, while A2 represents a set of queries (based on the different values of the variable ":categoryId"). Fetch module 550 is designed and controlled to first determine the category ids matching the condition "<100" by executing the query A1, and then generate the set of queries by substituting the value of the determined category ids in the place of the text ":categoryId" in A2.

It may be further appreciated that in an alternative embodiment, the "SELECT' portions of the queries A1 and A2 may be modified to fetch only the specific attributes (for example, "c.name", "i.name", "i.description", etc.) specified in the request (as a fifth parameter).

In step 640, fetch module 550 inspects ORM configuration files (282) to identify relationships among the set of objects not specified in the fetch plan. Accordingly, fetch module 550 may first examine the fetch plan (if specified in the request) to determine the objects for which the ORM configuration files (282) are to be inspected for identifying the relationships.

In the fetch method embodiment, fetch module 550 may determine the objects not specified in the fetch plan as the objects that are specified in the relationship map (second parameter). Accordingly, for the first invocation, fetch module 550 may inspect the ORM configuration files for identifying the relationship between ITEM and IMAGE, while for the second invocation, fetch module 550 may inspect the ORM configuration files for identifying all the relationships (as there is no fetch plan specified) specified in the relationship map.

Fetch module 550 inspects the ORM configuration files to identify the different types of relationships such as "one-to-one" (or "many-to-one"), "one-to-many", "many-to-many", etc. between the objects (in particular, the object types) based on the corresponding relationship tags specified in configuration files 282.

For example, fetch module 550 may identify a one-to-one (also referred to as an "association") between the CATEGORY and CATEGORYDETAIL object types based on the relationship tag "<one-to-one>" specified in line 453 of Figure 4B. Fetch module 550 may also identify a one-to-many (also referred to as a "collection") between CATEGORY and ITEM object types based on the relationship tags "<list>" and "<one-to-many>" specified in lines 448-452 of Figure 4B. Fetch module 550 may inspect the configuration file of Figure 4A and identify the collection relationship between ITEM and BID object types (lines 424-428) and also between ITEM and IMAGE object types (lines 429-433).

Fetch module 550 may similarly inspect the other configuration files (specified for other object types) to identify the relationships among the requested set of objects (not specified in the fetch plan). Thus, fetch module 550 for the first invocation may identify the collection relationship between ITEM and IMAGE, while for the second invocation may identify the collection relationships between CATEGORY and ITEM, ITEM and BID, ITEM and IMAGE based on the configuration files of Figures 4A and 4B.

In step 650, fetch module 550 generates queries based on the identified relationships. In one embodiment, the queries are generated according to ORM Best Practices specified for each type of relationship. For example, fetch module 550 may be designed and controlled to generate a single query for fetching objects whose object types have an association relationship (e.g. CATEGORY and CATEGORYDETAIL), while generating separate queries for fetching individual collections,that is objects whose object types have a collection relationship (e.g. CATEGORY and ITEM). Fetch module 550 may also be designed to generate separate ("subselect") queries for fetching parallel collections, that is, object types (e.g. BID and IMAGE) having a collection relationship with the same parent object type (e.g. ITEM).

The queries may be generated only for the objects specified in the relationship map (the second parameter) of the fetch method. Accordingly, for the first invocation, fetch module 550 identifies the relationships between the ITEM and IMAGE object types based on the configuration file of Figure 4A and then generates the following query according to HQL:

SELECT ima [A3]

FROM Image ima

WHERE ima.item.id = :itemId

As noted above, A3 represents a set of queries generated by substituting the variable ":itemId" with different values of the item identifier identified by execution of A2 set of queries. Thus, for each category id determined by execution of A1, a corresponding A2 query is generated and then an A3 set of queries is generated based on the item ids fetched by execution of the corresponding A2 query.

It is noted that the operator "left outer" specified in the relationship map for fetching both ITEM and related IMAGE objects is ignored by fetch module 550 for the generation of query A3, since the ITEM objects is identified as being already fetched along with the BID objects by the A2 set of queries. However, for an alternative invocation, for example for the data set {CATEGORY, ITEM, IMAGE} the operators specified in the relationship map may be used for fetching both ITEM and related IMAGE objects using a single query.

For the second invocation, where no fetch plan is specified, fetch module 550 may generate queries for fetching all the objects specified in the relationship map. An example set of queries that may be generated is shown below:

SELECT c [B1]

FROM Category c LEFT JOIN FETCH c.items

WHERE c.categoryId < 100;

SELECT b [B2]

FROM Bid b

WHERE b.item.id=:itemId;

SELECT ima [B3]

FROM Image ima

WHERE img.item.id=:itemId;

It may be observed that query B 1 is generated based on the ORM best practice of using a single query for a collection relationships between CATEGORY and ITEM, while queries B2 and B3 are generated as separate queries since there exists parallel collections ITEM-BID and ITEM-IMAGE. It should be noted that the operators specified in the relationship map of the second invocation for fetching BID and IMAGE objects are not used for generating B2 and B3 queries. However the operators may be used for the forming of objects in step 670 as described in detail below.

It may be appreciated that only an example set of queries that may be generated by fetch module 550 is shown above. In particular, the above generated queries are shown as fetching objects based on matching category and item identifiers. However, in alternative embodiments, other types of HQL queries, such as those having fetching by matching objects, may be generated by fetch module 550. For example, in an alternative embodiment, query A2 may be generated as:

SELECT i [A2a]

FROM Item i LEFT JOIN FETCH i.bids

WHERE i.category = :category;

It may be appreciated that the variable ":category" in query A2a represents a category object and not the category identifier shown in query A2. The other queries (based on the fetch plan and the identified relationships) may similarly be generated.

In step 660, fetch module 550 executes the queries generated (in steps 630 and 650) to retrieve the data corresponding to the requested objects. In general, the specific data to be retrieved corresponds to values stored in different columns (based on the attributes sought to be retrieved) in multiple rows (based on the condition specified) of one or more tables (base on the object types sought to be fetched).

For example, for data set S3, the data in rows which have the values in column CATEGORY_ID (corresponding to attribute categoryId) less than 100 in the table TBCATEGORY (corresponding to CATEGORY object type) need to be retrieved, along with the data in the rows of the tables corresponding to the other object types (ITEM, BID, etc.) that have matching values in their (foreign key) column corresponding to categoryId.

In one embodiment, fetch module 550 may invoke one or more of system modules 285 in ORM layer 280) for execution of the generated HQL queries. System modules 285 are designed and controlled to first convert the HQL queries to corresponding SQL queries for execution on database 290 based on the object relational mappings specified in configuration files 282. Thus, for the first invocation, system modules 285 may generate the following SQL queries:

SELECT C.* [Q1]

FROM TBCATEGORY AS C

WHERE C.CATEGORYID<100;

// Assuming that execution of Q1 returned category ids "12" and "45"

SELECT I.*, B.* [Q2]

FROM TBITEM I LEFT OUTER JOIN TBBID B ON I.ITEM_ID = B.ITEM_ID

WHERE CATEGORYID=12; // Category id from Q1

// Assuming that execution of Q2 returned item ids "124" and "127"

SELECT IMA.* [Q3]

FROM TBIMAGE AS IMA

WHERE ITEM_ID=124; // Item id from Q2

SELECT IMA.* [Q4]

FROM TBIMAGE AS IMA

WHERE ITEM_ID=127; //Item id from Q2

SELECT I.*, B.* [Q5]

FROM TBITEM I LEFT OUTER JOIN TBBID B ON I.ITEM_ID = B.ITEM_ID

WHERE CATEGORYID=45; // Category id from Q1

// Assuming that execution of Q5 returned item ids "452", "453" and "459"

SELECT IMA.* [Q6]

FROM TBIMAGE AS IMA

WHERE ITEM_ID=452; // Item id from Q5

SELECT IMA.* [Q7]

FROM TBIMAGE AS IMA

WHERE ITEM_ID=453; // Item id from Q5

SELECT IMA.* [Q8]

FROM TBIMAGE AS IMA

WHERE ITEM_ID=459; // Item id from Q5

It may be observed that the SQL queries Q1-Q8 are similar to the HQL queries A1-A3, but with the object types/attributes replaced by the corresponding tables/columns based on the ORM configuration files 282. It may also be observed that some of the queries such as Q6-Q8 are generated based on the actual values (item ids) returned by execution of a previous query Q4.

System module 285 executes the SQL queries Q1-Q8 to retrieve from database 290 the data corresponding to the requested objects. The successful execution of the queries results in retrieval of only the data (such as the values in the columns and rows of the tables noted above for data set S3) corresponding to the requested set of objects.

As noted above, system modules 285 is also designed to generate the SQL queries based on the global fetch plan specified in configuration files 282. For example, system modules 285 may generate a SQL query for retrieving data corresponding to the CATEGORYDETAIL objects associated with the CATEGORY objects retrieved by execution of query Q1 based on the global fetch plan specified in line 453 of Figure 4B.

Such retrieval of additional data may not be desirable. Accordingly, in a scenario that a the ORM framework enables the global fetch plan to be enabled/disabled, fetch module 550 is designed and controlled to disable the global fetch plan before invoking system modules 285 for execution of HQL queries, thereby ensuring that no additional data is retrieved by ORM layer 580.

In the scenario that the ORM framework (e.g., Hibernate) does not support the enabling/disabling of the global fetch plan, fetch module 550 is designed to set the "lazy" attribute to "true" programmatically, for all the relationships specified in configuration files 282, thereby ensuring that all the objects specified in the global fetch plan are lazily fetched only when accessed in the application. In other words, the objects that are indicated to be immediately fetched (as indicated by the "false" value for the "lazy" attribute in lines 421, 426 and 451) are overridden programmatically (by setting the value to "true") to ensure lazy fetching of all objects. The setting of the "lazy" attribute to "true" may be performed once before any requests for fetching objects are received.

In step 670, fetch module 550 forms the requested set of objects based on the retrieved data. The formation of the requested set of objects (e.g., data set S3) may involve creating the individual objects (such as CATEGORY, ITEM, BID, IMAGE objects) from the corresponding portions of the retrieved data and then connecting the created objects based on the relationships between the corresponding object types (CATEGORY-ITEM, ITEM-BID, ITEM-IMAGE) specified in configuration files 282.

In one embodiment, the creation of the individual objects (commonly referred to as "marshalling") is performed by system modules 285, which then provides the created individual objects to fetch module 550. The manner in which Hibernate framework performing marshalling is described in more detail in the book noted above. Broadly, for each row retrieved from a table (e.g. TBCATEGORY table) a corresponding object/instance of the object type (e.g. CATEGORY) mapped to the table is created and then the retrieved column values are stored in the attributes (e.g. categoryId) of the object that are mapped to the retrieved columns (e.g. CATEGORY_ID).

Fetch module 550 then connects the formed objects either received from system modules 285 or performed internally. The connection of the formed objects may be performed in a know way, for example, using reflection (well know in Java programming environments).

According to an aspect of the present invention, fetch module 550 is designed and controlled to generate a code module incorporating the queries generated in steps 630 and 650 and a set of instructions designed to connect the various individual objects specified in the request. Fetch module 550 (dynamically) generates the code module in response to receiving the request in step 610, and then executes the code module to cause the performance of steps 660, and 670.

For example, in response to the first invocation, fetch module 550 may generate a code module containing the below instructions (shown in Java like pseudo code):

```
    public List<Category> fetch() {
```

```
    List<Category> categories= session.createQuery(A1).list();
```

```
    foreach (category in categories) {
```

```
        query= session.createQuery(A2);
```

```
        query.setParameter("categoryId", category.getCategoryId());
```

```
        List<Item> items = query.list();
```

```
        category.setItems(items);
```

```
        foreach (item in items) {
```

```
            query= session.createQuery(A3);
```

```
            query.setParameter("itemId", item.getId());
```

```
            List<Image> images = query.list();
```

```
            item.setImages(images);
```

```
        }
```

```
    }
```

```
}
```

It may be observed that the pseudo-code incorporates the queries A1-A3 generated based on the use case specific fetch plan specified in the request as well as based on ORM best practices. It may also be observed that the values of the category id and item id are changed using respective foreach loops (the outer loop for category id and the inner loop for the item id), thereby generating the sets of queries corresponding to A2 and A3. Furthermore, the individual item and image objects created and provided by system modules 285 are connected to the appropriate category and item objects by the instructions "category.setItems(items)" and "category.setImages(images)".

Fetch module 550 may similarly generate another code module for the second invocation, as shown below (in Java like pseudo code):

```
public List<Category> fetch() {
```

```
    List<Category> categories= session.createQuery(B1).list();
```

```
    foreach (category in categories) {
```

```
        foreach (item in category.getItems()) {
```

```
            query= session.createQuery(B2);
```

```
            query.setParameter("itemId", item.getId());
```

```
            List<Bid> bids = query.list();
```

```
            item.setBids(bids);
```

```
            query= session.createQuery(B3);
```

```
            query.setParameter("itemId", item.getId());
```

```
            List<Image> images = query.list();
```

```
            item.setImages(images);
```

```
        }
```

```
    }
```

```
}
```

It may be observed that the instructions generated for the second invocation has different foreach loops and different set of queries (B1-B3) incorporated in the code module. In general, the queries are generated based on the operators specified in the fetch plan/relationship map, while the foreach loops are generated consistent with forming the connections between the fetched objects.

In step 680, fetch module 550 provides the formed set of objects as a response to the request (received in step 610). In one embodiment, fetch module 550 receives the formed set of objects as a result of execution of the dynamically generated code module (shown above) and then forwards the formed objects to the requesting process module (e.g. ProcessS3 Module 535C). The flow chart ends in step 699.

It may be appreciated that by using different approaches (such as use case specific fetch plans, ORM best practices) for generating the query, the requested set of objects may be fetched efficiently. Accordingly, fetch module 550 (single module implementation) provides optimal fetching of data in a data access tier (model layer 560) of a multi-tier application (500), wherein only the requested data is fetched in an highly efficient and maintainable manner.

It should be appreciated that the features described above can be implemented in various embodiments as a desired combination of one or more of hardware, executable modules, and firmware. The description is continued with respect to an embodiment in which various features are operative when executable modules are executed.

**13. Digital Processing System**

Figure 7 is a block diagram illustrating the details of digital processing system 700 in which various aspects of the present invention are operative by execution of appropriate executable modules of computer program code comprising computer program code portions devised to control a digital data processing system to perform the steps of the invention. Digital processing system 700 may correspond to any system (such as server system 160A-160B) executing fetch module 550.

Digital processing system 700 may contain one or more processors such as a central processing unit (CPU) 710, random access memory (RAM) 720, secondary memory 730, graphics controller 760, display unit 770, network interface 780, and input interface 790. All the components except display unit 770 may communicate with each other over communication path 750, which may contain several buses as is well known in the relevant arts. The components of Figure 7 are described below in further detail.

CPU 710 may execute instructions stored in RAM 720 to provide several features of the present invention. CPU 710 may contain multiple processing units, with each processing unit potentially being designed for a specific task. Alternatively, CPU 710 may contain only a single general-purpose processing unit.

RAM 720 may receive instructions from secondary memory 730 using communication path 750. RAM 720 is shown currently containing software instructions constituting operating environment 725 and/or other user programs 726 (such as the different tiers of the multi-tier applications, web/application server software, RDBMS, etc.). In addition to operating environment 725, RAM 720 may contain other software programs such as device drivers, virtual machines, etc., which provide a (common) run time environment for execution of other/user programs.

Graphics controller 760 generates display signals (e.g., in RGB format) to display unit 770 based on data/instructions received from CPU 710. Display unit 770 contains a display screen to display the images defined by the display signals. Input interface 790 may correspond to a keyboard and a pointing device (e.g., touch-pad, mouse) and may be used to provide inputs. Network interface 780 provides connectivity to a network (e.g., using Internet Protocol), and may be used to communicate with other systems (such as client systems 110A-110C, and database server 180) connected to the network.

Secondary memory 730 may contain hard drive 735, flash memory 736, and removable storage drive 737. Secondary memory 730 may store the data (for example, portions of configurations files shown in Figures 4A and 4B, portions of the use case specific fetch plans shown in Figure 4C) and software instructions (for example, forming the software modules shown in Figures 2 and 5, implementing the flowchart shown in Figure 6, forming the code modules dynamically generated by fetch module 550), which enable digital processing system 700 to provide several features in accordance with the present invention.

Some or all of the data and instructions may be provided on removable storage unit 740, and the data and instructions may be read and provided by removable storage drive 737 to CPU 710. Floppy drive, magnetic tape drive, CD-ROM drive, DVD Drive, Flash memory, removable memory chip (PCMCIA Card, EPROM) are examples of such removable storage drive 737.

Removable storage unit 740 may be implemented using medium and storage format compatible with removable storage drive 737 such that removable storage drive 737 can read the data and instructions. Thus, removable storage unit 740 includes a computer readable (storage) medium having stored therein computer software and/or data. However, the computer (or machine, in general) readable medium can be in other forms (e.g., non-removable, random access, etc.).

In this document, the term "computer program product" is used to generally refer to a computer program comprising computer program code stored on a data carrier such as a removable storage unit 740 or hard disk installed in hard drive 735. These computer program products are means for providing software to digital processing system 700. CPU 710 may retrieve the software instructions, and execute the instructions to provide various features of the present invention described above.

Reference throughout this specification to "one embodiment", "an embodiment", or similar language means that a particular feature, structure, or characteristic described in connection with the embodiment is included in at least one embodiment of the present invention. Thus, appearances of the phrases "in one embodiment", "in an embodiment" and similar language throughout this specification may, but do not necessarily, all refer to the same embodiment.

Furthermore, the described features, structures, or characteristics of the invention may be combined in any suitable manner in one or more embodiments. In the above description, numerous specific details are provided such as examples of programming, software modules, user selections, network transactions, database queries, database structures, hardware modules, hardware circuits, hardware chips, etc., to provide a thorough understanding of embodiments of the invention.

**14. Conclusion**

While various embodiments of the present invention have been described above, it should be understood that they have been presented by way of example only, and not limitation. Thus, the breadth and scope of the present invention should not be limited by any of the above described exemplary embodiments, but should be defined only in accordance with the following claims and their equivalents.

It should be understood that the figures and/or screen shots illustrated in the attachments highlighting the functionality and advantages of the present invention are presented for example purposes only. The present invention is sufficiently flexible and configurable, such that it may be utilized in ways other than that shown in the accompanying figures.

## Claims

1. A method of fetching data from a data store in a multi-tier application, said method comprising:
implementing a first process module according to a first business use case in a business logic tier of said multi-tier application, wherein said first business use case specifies a first sequence of interactions between said multi-tier application and users;
receiving in a fetch module implemented in a data access tier of said multi-tier application, a first request from said first process module specifying a first set of objects sought to be fetched from said data store according to the requirements for said first business use case; fetching, from said data store, only said first set of objects specified in said first request, said fetching being performed in said fetch module; and
providing, from said fetch module to said first process module, said first set of objects as a response to said first request.

2. The method of claim 1, further comprising:
implementing a second process module according to a second business use case in said business logic tier, wherein said second business use case specifies a second sequence of interactions between said multi-tier application and users,
wherein said receiving receives in said fetch module, a second request from said second process module specifying a second set of objects sought to be fetched from said data store according to the requirements for said second business use case,
wherein said fetching fetches from said data store said second set of objects,
wherein said providing provides from said fetch module to said second process module,
said second set of objects as a response to the said second request.

3. The method of claim 2, wherein said first request indicates a first set of object types corresponding to said first set of objects and said second request indicates a second set of object types corresponding to said second set of objects, wherein said first set of object types is different from said second set of object types.

4. The method of claim 3, wherein said first set of object types and said second set of object types are included in a plurality of object types,
wherein said plurality of object types form an object graph, said first set of object types form a first sub-graph of said object graph and said second set of object types form a second sub-graph of said object graph.

5. The method of claim 4, wherein said fetch module is designed to accept a parameter indicating the object types to be fetched,
wherein said first request corresponds to a first invocation of said fetch module with said parameter having a first value, wherein said first value specifies said first set of object types, wherein said second request corresponds to a second invocation of said fetch module with said parameter having a second value, wherein said second value specifies said second set of object types.

6. The method of claim 5, wherein said fetching further comprises:
generating a first set of queries in response to said first request and a second set of queries in response to said second request;
executing said first set of queries to retrieve from said data store only a first data corresponding to said first set of objects and said second set of queries to retrieve from said data store only a second data corresponding to said second set of objects; and
forming said first set of objects from said first data and said second set of objects from said second data.

7. The method of claim 6, wherein said generating said first set of queries further comprises:
identifying that a first relationship exists between a first object type and a second object type, said first set of object types comprising said first object type and second object type,
wherein said generating generates a first query comprised in said first set of queries based on said first relationship.

8. The method of claim 7, wherein said identifying identifies said first relationship by inspecting a configuration file specifying a plurality of relationships between said plurality of objects types;
and/or wherein said generating further comprises:
inspecting a fetch plan to determine that a first operation has to be used for fetching a third object type and a fourth object type, said first set of object types comprising said third object type and fourth object type; and
including said first operation in a second query for retrieving objects of said third object type and said fourth object type, wherein said first set of queries comprises said second query.

9. The method of claim 6, further comprising:
generating programmatically by said fetch module, a first code module designed to perform said executing of said first set of queries to retrieve said first data and said forming said first set of objects from said first data; and
executing by said fetch module, said first code module to cause said first set of objects to be formed and sent to said fetch module,
wherein said fetch module provides said first set of objects received from said first code module to said first process module as a response to said first request; and possibly
wherein said executing said first set of queries and said
second set of queries and said forming said first set of objects and said second set of objects are performed using a Object Relationship Mapping (ORM) framework.

10. A machine readable medium storing one or more sequences of instructions for causing a multi-tier application to fetch data from a data store, said one of more sequences of instructions comprising:
a first set of instructions representing a presentation tier of said multi-tier application,
said presentation tier comprising a plurality of web pages facilitating users to interact with said multi-tier application;
a second set of instructions representing a business logic tier of said multi-tier application, said business logic tier comprising a first process module implemented accoring to a first business use case, wherein said first business use case captures a first sequence of interactions between said multi-tier application and said users, wherein said first process module performs said first sequence of interactions with said users using said plurality of web pages; and
a third set of instructions representing a data acess tier of said multi-tier application, said data access tier comprising a fetch module designed to perform the actions of:
receiving a first request from said first process module specifying a first set of objects sought to be fetched from said data store, wherein said first request is sent by said first process module to facilitate a first interaction with said users, said first sequence of interactions comprising said first interaction;
fetching, from said data store, only said first set of objects specified in said first request; and
providing to said first process module, said first set of objects as a response to said first request.

11. The machine readable medium of claim 10, wherein for said fetching, said fetch module comprises one or more instructions for:
generating a first set of queries in response to said first request;
executing said first set of queries to retrieve from said data store only a first data corresponding to said first set of objects; and
forming said first set of objects from said first data.

12. The machine readable medium of claim 11, wherein for said generating, said fetch module comprises one or more instructions for:
identifying that a first relationship exists between a first object type of a first object and a second object type of a second object, said first set of objects comprising said first object and said second object,
wherein said generating generates a first query based on said first relationship, said first set of queries comprising said first query;
and/or wherein for said generating, said fetch
module comprises one or more instructions for:
inspecting a fetch plan to determine that a first operation has to be used for fetching a third object type of a third object and a fourth object type of a fourth object, said first set of objects comprising said third object and said fourth object; and
including said first operation in a second query for retrieving said third object and said fourth object, said first set of queries comprising said second query. and/or wherein said fetch module further
comprises one or more instructions for:
generating programmatically a fourth set of instructions representing a first code module designed to perform said executing of said first set of queries to retrieve said first data and said forming said first set of objects from said first data; and
executing said first code module to cause said first set of objects to be formed and sent to said fetch module,
wherein said fetch module provides said first set of objects received from said first code module to said first process module as a response to said first request.

13. A system comprising:
a client system to enable users to interact with a multi-tier application;
a data store to store data sought to be fetched by said multi-tier application;
a server system to execute said multi-tier application, wherein said multi-tier application comprises:
a first process module implemented according to a first business use case in a business logic tier of said multi-tier application, wherein said first business use case captures a first sequence of interactions between said multi-tier application and users using said client system;
a fetch module implemented in a data access tier of said multi-tier application,
wherein said fetch module is operable to:
receive first request from said first process module specifying a first set of objects sought to be fetched from said data store, wherein said first request is sent by said first process module to facilitate a first interaction with said users, said first sequence of interactions comprising said first interaction;
fetch, from said data store, only said first set of objects specified in said first request; and
provide to said first process module, said first set of objects as a response to said first request.

14. The system of claim 13, wherein for said fetching, said fetch module is operable to:
generate a first set of queries in response to said first request;
execute said first set of queries to retrieve from said data store only a first data corresponding to said first set of objects; and
form said first set of objects from said first data;
and possibly
wherein said fetch module is further operable to:
generate programmatically a first code module designed to said execute said first set of queries to retrieve said first data and said form said first set of objects from said first data; and
execute said first code module to cause said first set of objects to be formed and sent to said fetch module,
wherein said fetch module provides said first set of objects received from said first code module to said first process module as a response to said first request.

15. The system of claim 14, wherein said first code module is designed to said execute said first set of queries and said form said first set of objects using a Object Relationship Mapping (ORM) framework.
